# EUROPÄISCHE PATENTSCHRIFT

(11) **EP 2 542 460 B1**
(45) Veröffentlichungstag und Bekanntmachung des Hinweises auf die Patenterteilung: **02.04.2014**
(21) Anmeldenummer: 11707585.3
(22) Anmeldetag: 28.02.2011
(51) Int. Cl.: B62D 21/02, B62D 21/07

(54) **FAHRGESTELL FÜR NUTZFAHRZEUGE**
CHASSIS FOR COMMERCIAL VEHICLES
CHASSIS DE ROULEMENT POUR VEHICULES UTILITAIRES

(30) Priorität: 05.03.2010 DE 102010010366
(43) Veröffentlichungstag der Anmeldung: 09.01.2013
(73) Patentinhaber: Engineering Center Steyr GmbH & Co KG, 4300 St. Valentin (AT)
(72) Erfinder: SCHWARZ, Gregor, A-4407 Dietach (AT); WINTER, Martin, A-4407 Steyr/Gleink (AT); LEITNER, Martin, A-4441 Behamberg (AT); HIRSCH, Alois, A-3351 Weistrach (AT); HIRSCHBERG, Wolfgang, A-4400 Steyr (AT)
(74) Vertreter: Manitz, Finsterwald & Partner GbR
(86) Internationale Anmeldenummer: PCT/EP2011/000972
(87) Internationale Veröffentlichungsnummer: WO 2011/107246

(56) Entgegenhaltungen:
- US-A- 5 632 508
- US-A1- 2009 236 877
- US-A1- 2009 267 337

## Beschreibung

Die vorliegende Erfindung betrifft ein Fahrgestell für Nutzfahrzeuge, insbesondere für Sattelzugfahrzeuge, wobei das Fahrgestell entlang der Fahrzeuglängsachse in zwei oder drei separate Baugruppen unterteilt ist, wobei jede Baugruppe an den beiden Längsseiten des Fahrgestells ein jeweiliges Tragbauteil aufweist, wobei die beiden Tragbauteile einer jeden Baugruppe quer zur Fahrzeuglängsachse voneinander beabstandet und durch Verbindungselemente miteinander verbunden sind.

Fahrgestelle für Nutzfahrzeuge können auf Basis eines durchgehenden Leiterrahmens gefertigt werden. Ein derartiger Leiterrahmen besteht aus zwei parallelen Längsträgern, die beispielsweise als C-Profilelemente ausgebildet sind und die durch mehrere Querträger miteinander verbunden sind. An dem Leiterrahmen werden verschiedene Fahrzeugkomponenten angebracht, wie z.B. Vorder- und Hinterachse, Antriebsaggregate, Fahrerhaus, Transportaufbau oder Sattelkupplung, Treibstofftanks, Batteriekasten sowie das Abgassystem. Hinsichtlich einer flexiblen Verwendbarkeit eines Fahrgestelltyps für unterschiedliche Fahrzeugvarianten oder Antriebssysteme ist es jedoch wünschenswert, eine Modulbauweise vorzusehen.

Aus der EP 1 318 064 A2 ist ein modular aufgebauter Tragrahmen bekannt. Der Tragrahmen umfasst ein Frontmodul, ein Mittelmodul und ein Heckmodul, wobei jedes Modul zwei Längsträger aufweist. Die beiden Längsträger eines jeden Moduls sind aus einem Obergurt, einem Untergurt und mehreren Verbindungsstegen zusammengebaut. Hierdurch ergibt sich jedoch ein unerwünscht hoher Herstellungs- und Montageaufwand.

Die gattungsgemäße US 2009/0267337 A1 offenbart einen Fahrzeugrahmen in Form eines Leiterrahmens, dessen Längsträger aus ineinandergesteckten Hohlprofilen besteht. Die Hohlprofile sind hierbei aus Blechplatinen rollgeformt und längsnahtgeschweißt.

In der US 2009/0236877 A1 ist eine modulare Fahrzeugrahmen-Architektur offenbart, welche die Kombination im Wesentlichen identischer Vordermodule und Hintermodule mit unterschiedlichen Mittenmodulen vorsieht.

Die US 5,632,508 A offenbart einen Leiterrahmen, der aus einem Vordermodul, einem Mittenmodul und einem Hintermodul zusammengesetzt ist. Die Längsträger des Hintermoduls und des Mittenmoduls weisen einen U-förmigen Querschnitt auf. Die Längsträger des Vordermoduls weisen demgegenüber einen geschlossenen, rechteckigen Querschnitt auf.

Es besteht das Bestreben, ein entlang der Fahrzeuglängsachse modular aufgebautes Fahrgestell für Nutzfahrzeuge zu schaffen, das bei geringem Herstellungs- und Montageaufwand eine hohe Steifigkeit und ein geringes Gewicht besitzt.

Zu diesem Zweck weisen die Tragbauteile einer jeden Baugruppe ein jeweiliges Blechumformteil auf, das an der jeweiligen Längsseite des Fahrgestells eine Seitenwand des Fahrgestells bildet, wobei das Blechumformteil entlang der Höhe der jeweiligen Seitenwand einstückig ausgebildet ist.

Für sämtliche Baugruppen des Fahrgestells ist eine flächige Seitenwand vorgesehen, die durch ein jeweiliges Blechumformteil gebildet ist. Dieses Blechumformteil erstreckt sich über die Höhe des Fahrgestells in dem jeweiligen Längsabschnitt einstückig, d.h. das Blechumformteil erstreckt sich entlang der Fahrzeughochachse unterbrechungsfrei. Es ist also keine Unterteilung in einen Obergurt und einen hiervon in Vertikalrichtung separaten Untergurt vorgesehen. Derartige einstückige Seitenwände sind für jede Baugruppe, d.h. entlang der gesamten Länge des Fahrgestells vorgesehen. Die Seitenwände erstrecken sich hierbei im Wesentlichen entlang der Fahrzeuglängsachse und in vertikaler Richtung (d.h. entlang der Fahrzeughochachse). Im zusammengesetzten Zustand des Fahrgestells bilden die Seitenwände an den beiden Längsseiten des Fahrgestells somit eine im Wesentlichen durchgehende Fläche. Die die Seitenwände bildenden Blechumformteile sind vorzugsweise aus Stahl gefertigt und besitzen typischerweise eine Dicke zwischen 1,5 mm und 2,5 mm.

Das Fahrgestell zeichnet sich durch einen geringen Herstellungs- und Montageaufwand aus. Die die Tragbauteile bildenden Blechumformteile können in einem einzigen Umformprozess gefertigt und hierbei sogar mit integrierten Aufnahmen zur Befestigung verschiedener Fahrzeugkomponenten versehen werden. Insbesondere ist es zur Herstellung der Tragbauteile nicht erforderlich, separate Obergurte, Untergurte und Verbindungsstege aneinander zu montieren. Ein verringerter Montageaufwand wird durch eine geringe Anzahl von Schraubverbindungen erzielt. Die vorgefertigten Baugruppen werden miteinander verbunden, um das Fahrgestell zu bilden, wobei durch Variieren einzelner Bauelemente eine Anpassung beispielsweise bezüglich der Länge oder der Breite des Fahrgestells möglich ist. Teilweise können bezüglich der Blechumformteile baugleiche Teile zum Einsatz gelangen.

Durch die auf der gesamten Länge des Fahrgestells in Vertikalrichtung einstückigen Seitenwände wird eine vorteilhaft hohe Biege- und Torsionssteifigkeit des Fahrgestells erzielt. Die die Seitenwände bildenden Blechumformteile können dünn ausgebildet sein, so dass sich auch eine vorteilhafte Gewichtsreduzierung erzielen lässt. Die Gewichtsreduzierung ist besonders hoch, wenn eine Mischbauweise realisiert wird, bei der die genannten Blechumformteile verschweißt sind und teilweise geschlossene Profile bilden, und bei der Multifunktionselemente an den Tragbauteilen befestigt sind, wie nachfolgend noch erläutert wird. Die Gewichtsreduzierung trägt zu einer Verbesserung der Treibstoffökonomie und zu einer Erhöhung der Nutzlast bei.

Schließlich tragen die flächigen Seitenwände auch zu einer geschützten Unterbringung von Fahrzeugkomponenten bei, beispielsweise des Treibstofftanks in einem Mittenbereich des Fahrgestells.

Das Fahrgestell weist einen Vorderachsbereich, einen Hinterachsbereich und einen zwischen dem Vorderachsbereich und dem Hinterachsbereich gelegenen Mittenbereich auf. Diese Bereiche können den drei Baugruppen des Fahrgestells entsprechen. Dies ist jedoch nicht zwingend der Fall, wie nachfolgend noch für eine Ausführungsform mit lediglich zwei Baugruppen erläutert wird.

Es ist eine Aufgabe der Erfindung, modular aufgebaute Fahrgestelle für Nutzfahrzeuge hinsichtlich Steifigkeit und Gewicht weiter zu verbessern.

Die Lösung der Aufgabe erfolgt durch ein Fahrgestell mit den Merkmalen des Anspruchs 1.

Erfindungsgemäß sind in dem genannten Vorderachsbereich und Hinterachsbereich des Fahrgestells die die Tragbauteile bildenden Blechumformteile C-Profile, während die die Tragbauteile bildenden Blechumformteile in dem genannten Mittenbereich des Fahrgestells L-Profile sind. Hierdurch kann eine hohe Steifigkeit des Fahrgestells bei einem geringen Gewicht erzielt werden.

Vorteilhafte Ausführungsformen der Erfindung sind in den abhängigen Ansprüchen genannt und werden nachfolgend beschrieben.

Vorzugsweise sind die Baugruppen des Fahrgestells unlösbar miteinander verbunden. Insbesondere können die Baugruppen miteinander verschweißt sein. Beispielsweise können die die Tragbauteile bildenden Blechumformteile der verschiedenen Baugruppen miteinander verschweißt sein. Hierdurch ergibt sich eine besonders hohe Biege- und Torsionssteifigkeit des Fahrgestells. Zugleich wird der Montageaufwand noch weiter verringert. Ein Verschweißen der Baugruppen trägt auch zu einer weiteren Gewichtsreduzierung bei.

Besonders vorteilhaft ist es, wenn die Tragbauteile der verschiedenen Baugruppen in einem solchen Längsabschnitt des Fahrgestells miteinander verbunden sind, in dem die Tragbauteile einen im Vergleich zu anderen Längsabschnitten relativ großen Querschnitt einnehmen. Mit anderen Worten soll die gegenseitige Verbindung der Tragbauteile in einem solchen Längsabschnitt des Fahrgestells vorgesehen sein, in dem die Erstreckung der Tragbauteile innerhalb einer Normalebene zu der Fahrzeuglängsachse größer ist als in anderen Längsabschnitten des Fahrgestells. Insbesondere können die Tragbauteile in einem solchen Längsabschnitt des Fahrgestells miteinander verbunden sein, in dem das Fahrgestell seinen größten Querschnitt besitzt. Hierdurch kann die Befestigungsstelle zwischen den jeweiligen Tragbauteilen besonders groß ausfallen, was zu einer hohen Festigkeit der Verbindung und dementsprechend zu einer hohen Stabilität des Gesamtaufbaus beiträgt.

Ferner ist es bevorzugt, wenn zumindest in einer der verschiedenen Baugruppen des Fahrgestells oder zumindest in einem Bereich des Fahrgestells die Tragbauteile ausschließlich durch das genannte jeweilige Blechumformteil gebildet sind. Hierdurch kann das Gewicht des Fahrgestells noch weiter reduziert werden.

Eine hohe Biege- und Torsionssteifigkeit kann trotz der Verwendung von Blechumformteilen für die Tragbauteile erreicht werden, wenn die Blechumformteile L-Profile, C-Profile oder Profilteile sind, die von einem C-Profil in ein L-Profil übergehen.

Eine besonders hohe Biege- und Torsionssteifigkeit wird ferner erzielt, wenn die Seitenwände einer jeden Baugruppe im Wesentlichen geschlossen sind. Mit anderen Worten sollen die Seitenwände über die gesamte Länge des Fahrgestells abgesehen von Zugangsöffnungen an ausgewählten Stellen eine geschlossene Fläche bilden. Alternativ hierzu können an den Seitenwänden jedoch auch Ausnehmungen zur Gewichtsersparnis vorgesehen sein.

Eine besonders hohe Biege- und Torsionssteifigkeit der Tragbauteile in dem genannten Vorderachsbereich und/oder in dem genannten Hinterachsbereich des Fahrgestells wird erreicht, wenn diese Tragbauteile als ein jeweiliges geschlossenes Profil ausgebildet sind. Beispielsweise kann in das ein C-Profil bildende Blechumformteil ein weiteres C-Profil oder ein L-Profil eingesetzt sein, oder das jeweilige Blechumformteil bildet ein C-Profil, an dem ein planes Blechteil angeflanscht wird.

Für den genannten Mittenbereich des Fahrgestells kann eine besonders hohe Biege- und Torsionssteifigkeit erzielt werden, wenn dort das jeweilige Blechumformteil ein L-Profil ist, wobei der lange Schenkel des L-Profils die jeweilige Seitenwand bildet und der kurze Schenkel des L-Profils einen Teil der Oberseite oder der Unterseite des Fahrgestells bildet. Vorzugsweise bildet der kurze Schenkel des L-Profils einen Teil der Oberseite des Fahrgestells und dient hierbei als Auflagefläche für ein lösbares Deckelblechteil. Alternativ zu der Ausbildung als L-Profil können die die Tragbauteile bildenden Blechumformteile im Mittenbereich des Fahrgestells jedoch auch ein jeweiliges C-Profil sein, wobei die beiden kurzen Schenkel der C-Form einen Teil der Oberseite und einen Teil der Unterseite des Fahrgestells bilden und die Basis der C-Form die Seitenwand des Fahrgestells bildet.

Weiterhin ist es bevorzugt, wenn in dem genannten Mittenbereich des Fahrgestells die beiden Tragbauteile an der Unterseite des Fahrgestells durch ein Bodenblechteil miteinander verbunden sind. Mit anderen Worten ist das die beiden Tragbauteile im Mittenbereich verbindende Element durch ein im Wesentlichen planes Blechteil gebildet. Das Bodenblechteil kann allerdings profiliert und mit Öffnungen zur Gewichtsersparnis versehen sein. Vorzugsweise ist das Bodenblechteil mit den beiden Tragbauteilen verschweißt.

In dem genannten Mittenbereich des Fahrgestells sind die beiden Tragbauteile an der Oberseite vorzugsweise durch ein Deckblechteil miteinander verbunden, wobei auch das Deckblechteil ein im Wesentlichen planes Blechteil sein kann. Vorzugsweise ist das Deckblechteil mit den Tragbauteilen lösbar verbunden (beispielsweise durch Verschrauben), um einen Zugang zum Innenraum des genannten Mittenbereichs des Fahrgestells zu ermöglichen. In dem Innenraum des Mittenbereichs des Fahrgestells kann beispielsweise ein Treibstofftank und/oder ein anderer Energiespeicher angeordnet sein.

Besonders vorteilhaft ist es, wenn in dem Mittenbereich des Fahrgestells die beiden Tragbauteile gemeinsam mit dem genannten Bodenblechteil und dem Deckblechteil ein geschlossenes Profil bilden. Mit anderen Worten wird hierdurch in dem Mittenbereich des Fahrgestells ein Kastenelement gebildet, wodurch eine besonders hohe Biege- und Torsionssteifigkeit erzielt wird.

In dem genannten Mittenbereich des Fahrgestells können an mehreren Längsabschnitten auch noch geradlinige oder L-förmige Hutprofile eingesetzt sein, die bei lediglich geringer Gewichtserhöhung eine wesentliche Verbesserung der Steifigkeit bewirken.

Gemäß einer vorteilhaften Ausführungsform sind in dem genannten Mittenbereich des Fahrgestells zwischen den zwei Seitenwänden zwei Treibstofftanks aufgenommen, wobei der eine Tank benachbart zu der einen Seitenwand angeordnet ist und der andere Tank benachbart zu der anderen Seitenwand des Fahrgestells angeordnet ist, und wobei die beiden Tanks voneinander beabstandet sind. Hierdurch sind an dem Fahrgestell keine Seitenkonsolen erforderlich, um die Tanks an der Außenseite des Fahrgestells zu befestigen. Durch die Unterbringung der Tanks innerhalb der beiden Tragbauteile wird stattdessen eine vorteilhafte Verlegung der Gewichtsverteilung nach innen erreicht, wodurch eine Verringerung der Torsionsanregung und Gierträgheit des Fahrgestells erzielt wird. Durch den Abstand der beiden Tanks voneinander kann ein mittiger Durchlass für eine Antriebsgelenkwelle des Fahrzeugs gebildet werden. Für die Montage der beiden Tanks können diese nacheinander von oben in den Mittenbereich des Fahrgestells eingesetzt und danach zur Seite versetzt und dort befestigt werden. Die bereits genannten, in den Mittenbereich eingesetzten Hutprofile können hierbei als Auflager für die Tanks dienen.

Alternativ oder zusätzlich kann in dem genannten Mittenbereich des Fahrgestells auch ein anderer Energiespeicher angeordnet sein (z.B. Batterie, Gasspeicher).

Gemäß einer Ausführungsform kann das Fahrgestell entlang der Fahrzeuglängsachse in drei Baugruppen unterteilt sein, wobei eine vordere Baugruppe dem genannten Vorderachsbereich, eine mittlere Baugruppe dem Mittenbereich und eine hintere Baugruppe dem Hinterachsbereich des Fahrgestells zugeordnet ist.

Bei dieser Ausführungsform können die beiden Tragbauteile der mittleren Baugruppe, welche gegenüber der vorderen Baugruppe und der hinteren Baugruppe typischerweise verbreitert ist, im Wesentlichen einlagig ausgebildet sein. Hierdurch wird bei besonders geringem Gewicht eine ausreichende Steifigkeit des Fahrgestells erzielt. Aufgrund des vergleichsweise großen Abstands der beiden Tragbauteile der mittleren Baugruppe kann es nämlich ausreichend sein, wenn diese lediglich mit Versteifungselementen versehen sind, beispielsweise mit den bereits genannten Hutprofilen.

Bei der genannten Ausführungsform ist es ferner bevorzugt, wenn die Tragbauteile der mittleren Baugruppe baugleich sind. Mit anderen Worten können die betreffenden Blechumformteile der mittleren Baugruppe als Gleichteile ausgebildet sein. Hierdurch verringern sich die Herstellkosten des Fahrgestells.

Weiterhin ist es bevorzugt, wenn die Tragbauteile der vorderen Baugruppe und/oder die Tragbauteile der hinteren Baugruppe eine jeweilige trichterförmige Erweiterung umfassen, an der die Tragbauteile mit dem jeweiligen Tragbauteil der mittleren Baugruppe verbunden sind. Eine derartige trichterförmige Erweiterung ermöglicht eine Querschnittsanpassung zwischen den verschiedenen Längsbereichen des Fahrgestells. Vor allem kann hierdurch die Befestigungsstelle zwischen dem jeweiligen Tragbauteil der vorderen oder hinteren Baugruppe und dem jeweiligen Tragbauteil der mittleren Baugruppe vergleichsweise groß ausfallen, was zu einer hohen Stabilität des Gesamtaufbaus beiträgt.

Gemäß einer alternativen Ausführungsform ist das Fahrgestell entlang der Fahrzeuglängsachse in zwei Baugruppen unterteilt, wobei eine vordere Baugruppe dem genannten Vorderachsbereich und einem vorderen Teil des Mittenbereichs des Fahrgestells zugeordnet ist, und wobei eine hintere Baugruppe dem Hinterachsbereich und einem hinteren Teil des Mittenbereichs des Fahrgestells zugeordnet ist.

Bei dieser alternativen Ausführungsform ist besonders vorteilhaft, wenn die vordere Baugruppe und die hintere Baugruppe in einem solchen Längsabschnitt des Mittenbereichs des Fahrgestells miteinander verbunden sind, in dem das Fahrgestell seinen größten Querschnitt besitzt. Hierdurch kann die Befestigung der vorderen Baugruppe und der hinteren Baugruppe aneinander an einer besonders großen Befestigungsstelle erfolgen, die spannungsarm um die Fahrzeuglängsachse umläuft. Dies trägt zu einer Erhöhung der Stabilität des Gesamtaufbaus bei, insbesondere im Falle eines Verschweißens der beiden Baugruppen aneinander.

Bei der genannten alternativen Ausführungsform können die Tragbauteile der vorderen Baugruppe in einem Übergangsabschnitt zwischen dem Vorderachsbereich und dem Mittenbereich des Fahrgestells eine jeweilige trichterförmige Erweiterung umfassen. Alternativ oder zusätzlich können die Tragbauteile der hinteren Baugruppe in einem Übergangsbereich zwischen dem Hinterachsbereich und dem Mittenbereich des Fahrgestells eine jeweilige trichterförmige Erweiterung umfassen. Eine derartige trichterförmige Erweiterung ermöglicht eine Querschnittsanpassung zwischen dem Vorderachsbereich oder Hinterachsbereich einerseits und dem Mittenbereich andererseits.

Gemäß einer weiteren vorteilhaften Ausführungsform der Erfindung sind am vorderen Ende des Fahrgestells die betreffenden Tragbauteile mit einem jeweiligen Multifunktionsgussteil verbunden. Ein derartiges Multifunktionsgussteil kann Aufnahmen (insbesondere Anschraubaufnahmen) für einen vorderen Querträger, für eine Vorderachsaufhängung, für einen Unterfahrschutz, für eine Lenkungsanordnung, für eine vordere Fahrerhauslagerung und für eine Abschleppöse bereitstellen. Die beiden Multifunktionsgussteile sind durch den genannten vorderen Querträger miteinander verbunden, wodurch auch die beiden Tragbauteile indirekt miteinander verbunden sind. Der vordere Querträger ist vorzugsweise ein Blechumformteil und umfasst Aufnahmen für die Vorderachsaufhängung. Durch die Verwendung derartiger Multifunktionsgussteile ergibt sich eine Mischbauweise des Fahrgestells, die bei Bereitstellung sämtlicher erforderlicher Aufnahmen für Fahrzeugkomponenten eine besonders einfache Herstellung und ein vorteilhaft geringes Gewicht des Fahrgestells ermöglicht.

Die im Vorderachsbereich vorgesehenen Tragbauteile des Fahrgestells besitzen vorzugsweise Aufnahmen für die Aggregatelagerung, eine Konsole für den Stoßdämpfer sowie Aufnahmen für die Blattfedern des Fahrzeugs. Vorzugsweise sind die Tragbauteile des Vorderachsbereichs zusätzlich durch eine Querbrücke miteinander verbunden, die auch als hintere Fahrerhauslagerung dient.

In dem Hinterachsbereich des Fahrgestells können die die Tragbauteile bildenden Blechumformteile (z.B. C-Profile) mit L-Winkelaussteifungen geschlossen sein, um ein jeweiliges geschlossenes Profil zu bilden. An einem vorderen Abschnitt und an einem hinteren Abschnitt des Hinterachsbereichs können die beiden Tragbauteile durch einen Querträger fest miteinander verbunden sein, wobei der jeweilige Querträger vorzugsweise durch ein Blechumformteil gebildet ist. An den Enden des vorderen Querträgers sind vorzugsweise Anschraubaufnahmen für einen jeweiligen Dreieckslenker eingearbeitet. An der Unterseite der Tragbauteile des Hinterachsbereichs können je zwei tellerförmige Aufnahmen für die Luftfederbälge der Hinterachsfederung vorgesehen sein. Die beiden Tragbauteile können an der Innenseite auch eine jeweilige Verschraubungsleiste aufweisen, an der eine Sattelkupplung aufgesetzt und verschraubt wird.

Schließlich ist anzumerken, dass das Fahrgestell und insbesondere die Tragbauteile des Fahrgestells nicht ausschließlich aus den vorgenannten Blechumformteilen, Profilen und sonstigen Elementen bestehen müssen. Je nach Anwendungszweck und Anforderungen an die Steifigkeit können zusätzliche Elemente, insbesondere Versteifungsprofile, Blecherweiterungen etc. vorgesehen sein.

Die Erfindung wird nachfolgend im Wesentlichen lediglich beispielhaft unter Bezugnahme auf die Zeichnungen erläutert.
- Figur 1: zeigt eine Perspektivansicht einer ersten Ausführungsform eines Fahrgestells von schräg vorne.
- Figur 2: zeigt eine Perspektivansicht der ersten Ausführungsform von schräg hinten.
- Figur 3: zeigt eine Draufsicht der ersten Ausführungsform.
- Figur 4: zeigt eine Unteransicht der ersten Ausführungsform.
- Figur 5: zeigt eine Seitenansicht der ersten Ausführungsform.
- Figur 6: zeigt eine Frontansicht der ersten Ausführungsform.
- Figur 7: zeigt eine Querschnittsansicht entlang der Ebene VII-VII gemäß Figur 5.
- Figur 8: zeigt eine Querschnittsansicht entlang der Ebene VIII-VIII gemäß Figur 5.
- Figur 9: zeigt eine Querschnittsansicht entlang der Ebene IX-IX gemäß Figur 5.
- Figur 10: zeigt eine Perspektivansicht einer zweiten Ausführungsform eines Fahrgestells von schräg vorne.

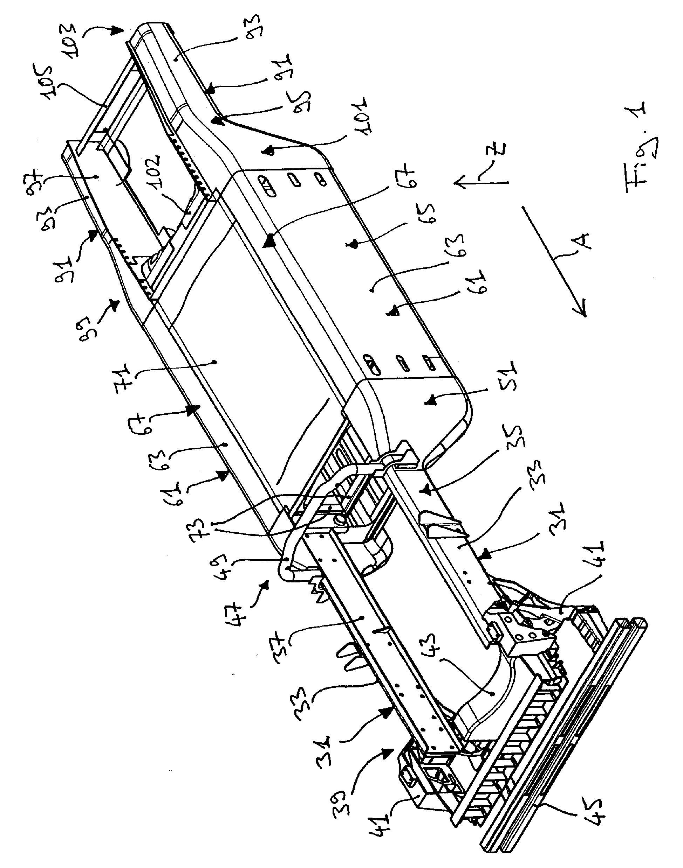

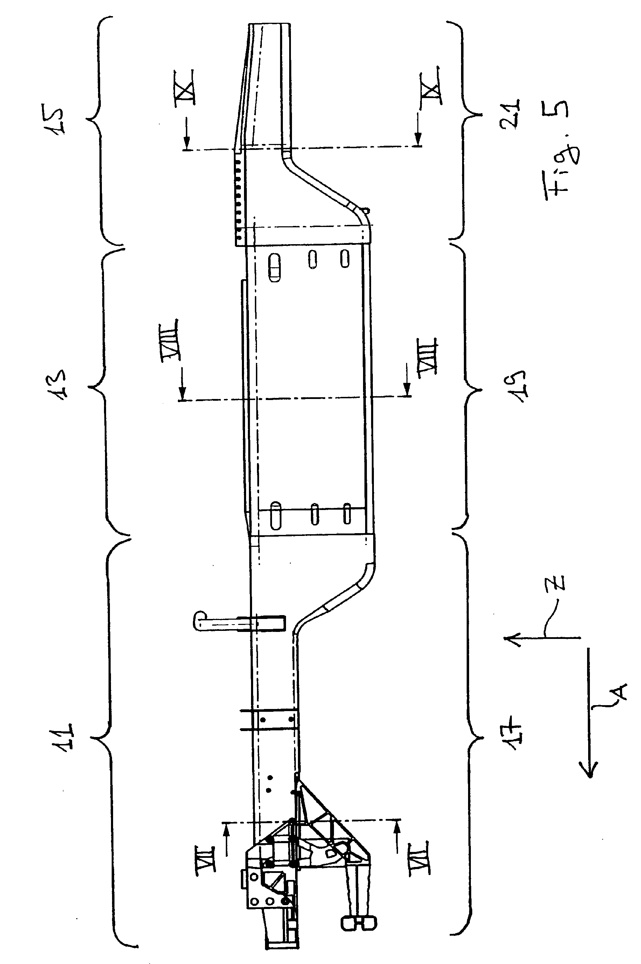

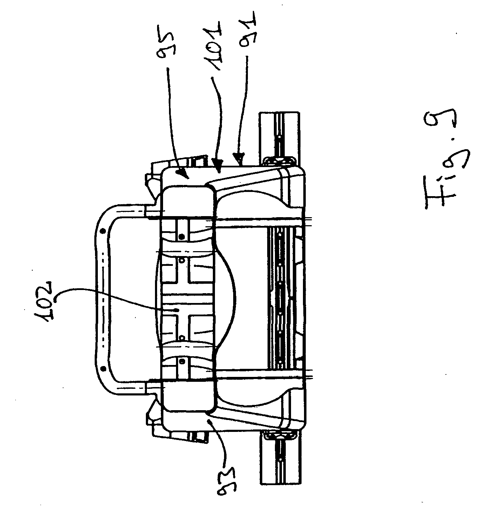

In den Figuren 1 und 9 ist eine erste Ausführungsform eines Fahrgestells für Nutzfahrzeuge, insbesondere für Sattelzugfahrzeuge, gezeigt. Wie in der Seitenansicht gemäß Figur 5 dargestellt ist, umfasst das Fahrgestell einen Vorderachsbereich 11, einen Mittenbereich 13 und einen Hinterachsbereich 15, wobei der Mittenbereich 13 zwischen dem Vorderachsbereich 11 und dem Hinterachsbereich 15 liegt. Bei der ersten Ausführungsform ist das Fahrgestell entlang einer Fahrzeuglängsachse A in eine vordere Baugruppe 17, eine mittlere Baugruppe 19 und eine hintere Baugruppe 21 unterteilt, wobei die vordere Baugruppe 17 dem Vorderachsbereich 11 zugeordnet ist, die mittlere Baugruppe 19 dem Mittenbereich 13 zugeordnet ist und die hintere Baugruppe 21 dem Hinterachsbereich 15 des Fahrgestells zugeordnet ist.

Das Fahrgestell besitzt an seinen beiden Längsseiten, d.h. an der in Fahrtrichtung betrachtet linken und rechten Flanke, eine durchgehende, flächige Seitenwand, die bei jeder Baugruppe 17, 19, 21 durch ein Blechumformteil gebildet ist, welches ein jeweiliges Tragbauteil der betreffenden Baugruppe 17, 19, 21 teilweise oder ausschließlich bildet. Bei jeder Baugruppe 17, 19, 21 ist die jeweilige Seitenwand bzw. das entsprechende Blechumformteil entlang der jeweiligen Höhe der Seitenwand einstückig ausgebildet. Dieses Merkmal und weitere Merkmale werden nachfolgend für die verschiedenen Baugruppen 17, 19, 21 im Einzelnen erläutert.

Wie in Fig. 1 gezeigt ist, umfasst die vordere Baugruppe 17 in dem Vorderachsbereich 11 zwei Tragbauteile 31. Jedes Tragbauteil 31 weist ein Blechumformteil 33 auf, das als ein C-Profil ausgebildet ist, wobei die Basis der C-Form an der jeweiligen Längsseite des Fahrgestells eine Seitenwand 35 des Fahrgestells bildet. Das jeweilige Blechumformteil 33 ist entlang der jeweiligen Höhe der betreffenden Seitenwand 35, d.h. entlang der Hochachse Z des Fahrzeugs, einstückig ausgebildet. In das jeweilige Blechumformteil 33 ist ein Versteifungselement 37 eingesetzt, das ebenfalls durch ein C-Profil gebildet ist und mit dem Blechumformteil 33 verschweißt ist. Die beiden Tragbauteile 31 sind somit als ein jeweiliges geschlossenes Profil, d.h. als ein Hohlprofil ausgebildet, und sie dienen innerhalb der Baugruppe 17 als Längsträger.

An einem vorderen Endabschnitt 39 ist an dem jeweiligen Tragbauteil 31 ein Multifunktionsgussteil 41 befestigt, beispielsweise angeschraubt. Das jeweilige Multifunktionsgussteil 41 umfasst Aufnahmen für einen vorderen Querträger 43, für eine Vorderachsaufhängung, für einen Unterfahrschutz 45, für eine Lenkungsanordnung und für eine vordere Fahrerhauslagerung. Der vordere Querträger 43 ist durch ein Blechumformteil gebildet, das an den beiden Multifunktionsgussteilen 41 angeschraubt ist und die beiden Tragbauteile 31 somit indirekt miteinander verbindet.

In einem hinteren Endabschnitt 47 sind die beiden Tragbauteile 31 durch eine Querbrücke 49 verbunden, die zugleich als hintere Fahrerhauslagerung dient. In dem hinteren Endabschnitt 47 umfassen die Tragbauteile 31 eine jeweilige trichterförmige Erweiterung 51. Mit anderen Worten vergrößert sich der Querschnitt des die jeweilige Seitenwand 35 bildenden Blechumformteils 33 entlang der Fahrzeughochachse Z.

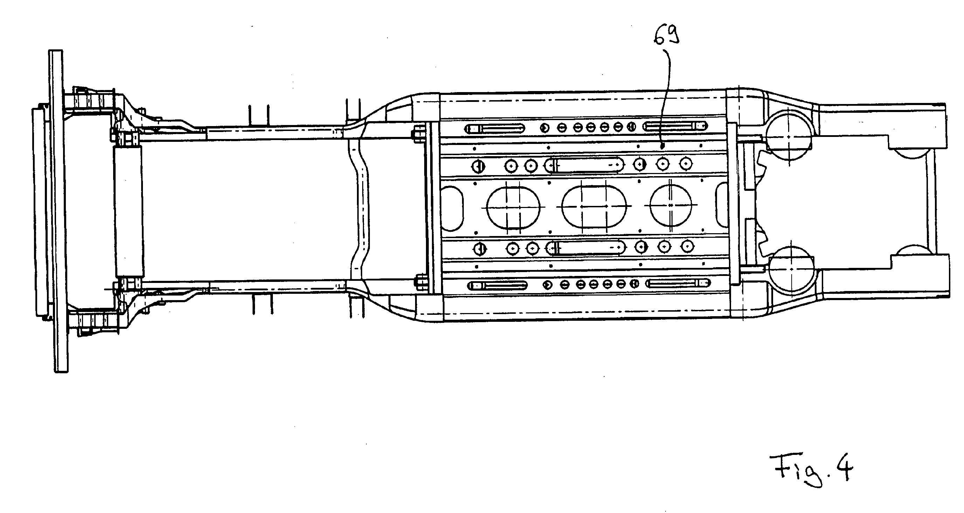

In dem Mittenbereich 13 des Fahrgestells besitzt die mittlere Baugruppe 19 ebenfalls zwei Tragbauteile 61, die durch ein jeweiliges Blechumformteil 63 gebildet sind. Jedes Blechumformteil 63 ist ein umgekehrtes L-Profil, d.h. der lange Schenkel des L-Profils bildet eine jeweilige Seitenwand 65 und der kurze Schenkel des L-Profils bildet an der Oberseite der mittleren Baugruppe 19 eine Auflagefläche 67. An der Unterseite des Fahrgestells sind die beiden Tragbauteile 61 mit einem Bodenblechteil 69 unlösbar verbunden, insbesondere verschweißt (vgl. Fig. 4). Das Bodenblechteil 69 ist profiliert und mit Öffnungen zur Gewichtsreduzierung versehen. Das Bodenblechteil 69 verbindet die beiden Tragbauteile 61 somit quer zur Fahrzeuglängsachse A. An der Oberseite können die beiden Tragbauteile 61 mit einem Deckblechteil 71 lösbar verbunden werden, wobei das Deckblechteil 71 vorzugsweise an den Auflageflächen 67 der beiden Tragbauteile 61 verschraubt wird. Die Tragbauteile 61, das Bodenblechteil 69 und das Deckblechteil 71 bilden gemeinsam ein geschlossenes Profil, wobei die Tragbauteile 61 innerhalb der Baugruppe 19 als Längsträger dienen.

Die die beiden Tragbauteile 61 bildenden Blechumformteile 63 sind vorzugsweise baugleich. Die beiden Tragbauteile 61 sind im Mittenbereich 13 des Fahrgestells vorzugsweise einlagig ausgebildet. Allerdings können Hutprofile 73 oder sonstige Versteifungselemente vorgesehen sein, um die Tragbauteile 61 und insbesondere die Seitenwände 65 zu stabilisieren.

Bei entferntem Deckblechteil 71 könnten von oben zwei Treibstofftanks (nicht gezeigt) in den Mittenbereich 13 des Fahrgestells eingesetzt werden, wobei der jeweilige Tank an der betreffenden Auflagefläche 67 vorbeigeführt und auf dem Bodenblechteil 69 oder einem dort vorgesehenen Versteifungselement abgesetzt und sodann seitlich versetzt wird, so dass der jeweilige Tank benachbart zu der Innenseite der jeweiligen Seitenwand 65 angeordnet ist. Hierdurch ergibt sich eine vorteilhafte Gewichtsverteilung, und zwischen den beiden Tanks verbleibt ein Zwischenraum beispielsweise zum Durchführen einer Antriebsgelenkwelle.

In dem Hinterachsbereich 15 des Fahrgestells umfasst die hintere Baugruppe 21 zwei Tragbauteile 91, die ein jeweiliges Blechumformteil 93 aufweisen, welches ein C-Profil ist. Die Basis der C-Form bildet an der jeweiligen Längsseite des Fahrgestells eine Seitenwand 95 des Fahrgestells, die sich auch hier entlang der Fahrzeughochachse Z einstückig erstreckt. In jedes Blechumformteil 93 ist ein Versteifungselement 97 in Form eines L-Profils eingesetzt und ist dort mit dem Blechumformteil 93 vorzugsweise verschweißt. Die beiden Tragbauteile 19 bilden somit ein jeweiliges geschlossenes Profil und dienen innerhalb der Baugruppe 21 als Längsträger.

An einem vorderen Endabschnitt 99 weisen die beiden Tragbauteile 91 eine jeweilige trichterförmige Erweiterung 101 auf, d.h. das jeweilige Blechumformteil 93 besitzt hier einen entlang der Fahrzeughochachse Z vergrößerten Querschnitt. An dem vorderen Endabschnitt 99 sind die beiden Tragbauteile 91 durch einen vorderen Quersträger 102 miteinander verbunden. An einem hinteren Endabschnitt 103 sind die beiden Tragbauteile 91 durch einen hinteren Querträger 105 miteinander verbunden.

Die Baugruppen 17, 19, 21 können als separate Einheiten vorgefertigt werden. Die Endmontage des Fahrgestells geschieht dadurch, dass die drei Baugruppen 17, 19, 21 unlösbar miteinander verbunden werden, insbesondere an den Tragbauteilen 31, 61, 91 miteinander verschweißt werden. Durch die trichterförmigen Erweiterungen 51, 101 ist nicht nur eine Anpassung des Querschnitts das Tragbauteil 31 bzw. 91 des Vorderachsbereichs 11 und des Hinterachsbereich 15 an den Querschnitt das Tragbauteil 61 des Mittenbereichs 13 gewährleistet, sondern es ergeben sich auch besonders große und somit stabile Befestigungsstellen.

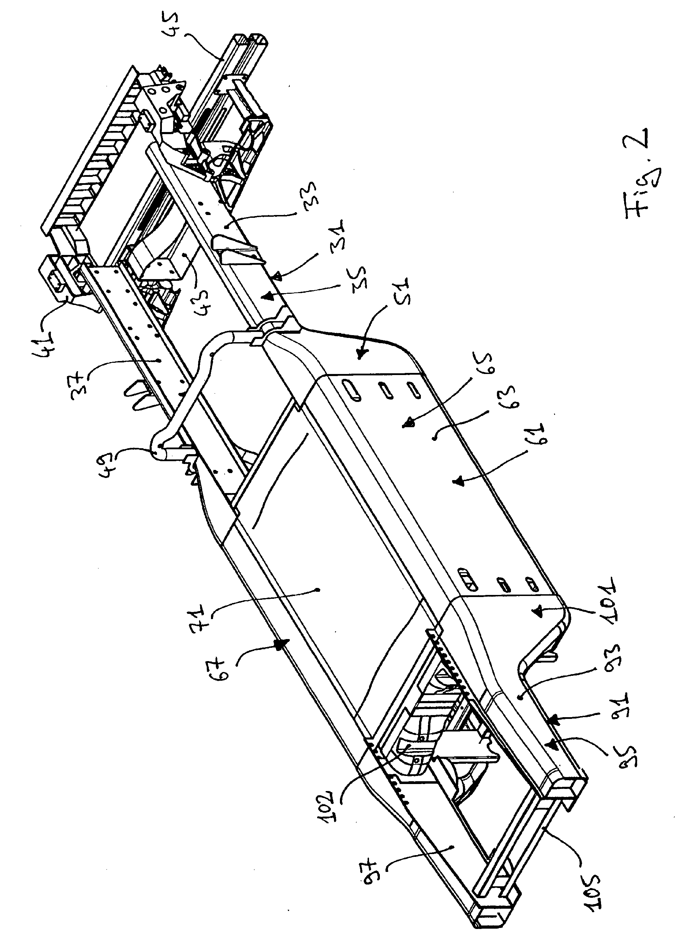

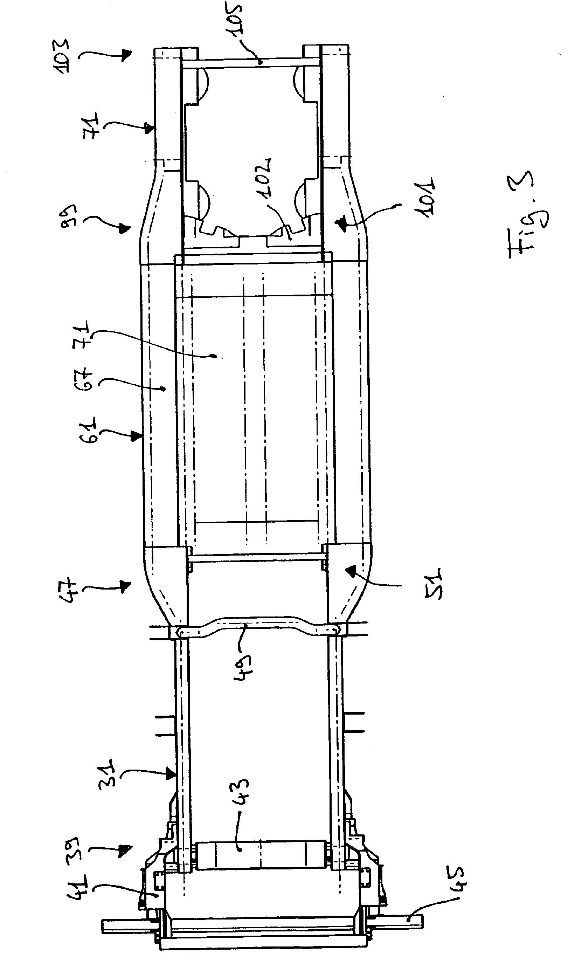

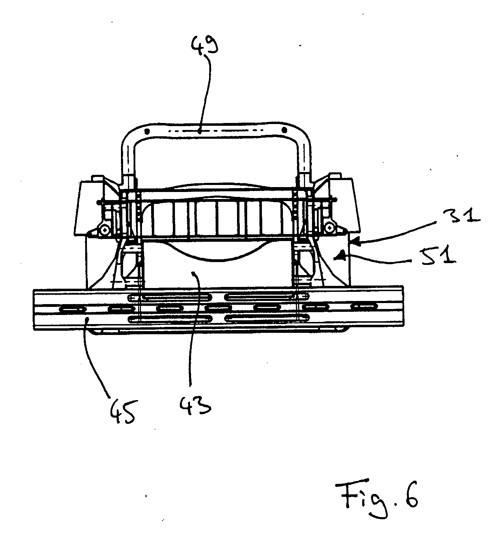

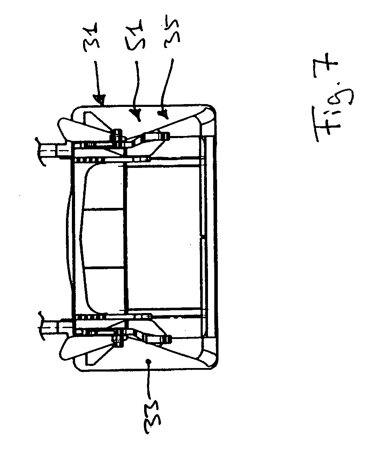

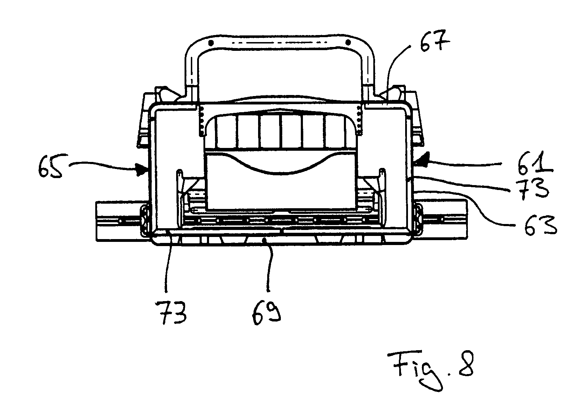

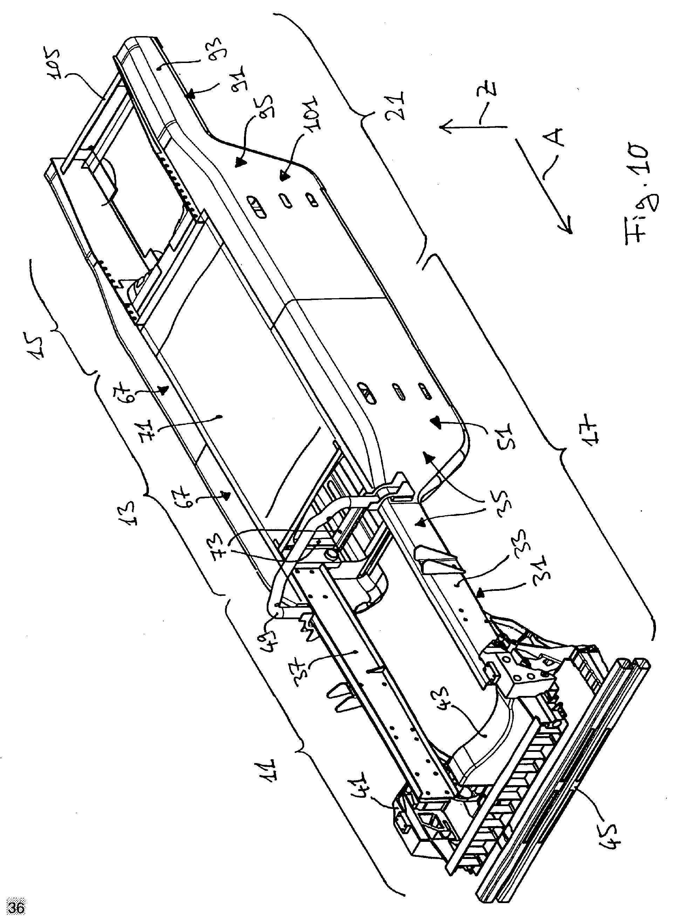

Figur 10 zeigt eine zweite Ausführungsform. Im Unterschied zu der ersten Ausführungsform gemäß Figuren 1 bis 9 sind lediglich eine vordere Baugruppe 17 und eine hintere Baugruppe 21 vorgesehen, die im Mittenbereich 13 des Fahrgestells miteinander verbunden sind. Mit anderen Worten ist die vordere Baugruppe 17 dem Vorderachsbereich 11 und einem vorderen Teil des Mittenbereichs 13 zugeordnet, und die hintere Baugruppe 21 ist dem Hinterachsbereich 15 und einem hinteren Teil des Mittenbereichs 13 zugeordnet. Die Tragbauteile 31 der vorderen Baugruppe 17 und die Tragbauteile 91 der hinteren Baugruppe 21 sind im endmontierten Zustand des Fahrgestells an der jeweiligen trichterförmigen Erweiterung 51 bzw. 101 miteinander unlösbar verbunden. Hierdurch kann an einem besonders spannungsarmen großen Querschnitt des Mittenbereichs 13 beispielsweise eine stabile Schweißverbindung vorgesehen werden.

Den beiden anhand der Figuren 1 bis 10 beispielhaft erläuterten Ausführungsformen ist gemeinsam, dass die Tragbauteile 31, 61, 91 einer jeden Baugruppe 17, 19, 21 ein jeweiliges Blechumformteil 33, 63, 93 aufweisen, das an der jeweiligen Längsseite des Fahrgestells eine Seitenwand 35, 65, 95 des Fahrgestells bildet, wobei das Blechumformteil 33, 63, 93 entlang der Höhe der jeweiligen Seitenwand 35, 65, 95 einstückig ausgebildet ist. Zum Zwecke der Endmontage werden die Baugruppen 17, 19, 21 zumindest an den genannten Blechumformteilen 33, 63, 93 miteinander verschweißt. Hierdurch ergibt sich ein entlang der Fahrzeuglängsachse A modular aufgebautes Fahrgestell, das bei geringem Herstellungs- und Montageaufwand eine hohe Steifigkeit und ein geringes Gewicht besitzt.

### Bezugszeichenliste

- 11: Vorderachsbereich
- 13: Mittenbereich
- 15: Hinterachsbereich
- 17: vordere Baugruppe
- 19: mittlere Baugruppe
- 21: hintere Baugruppe
- 31: Tragbauteil
- 33: Blechumformteil
- 35: Seitenwand
- 37: Versteifungselement
- 39: vorderer Endabschnitt
- 41: Multifunktionsgussteil
- 43: Querträger
- 45: Unterfahrschutz
- 47: hinterer Endabschnitt
- 49: Querbrücke
- 51: trichterförmige Erweiterung
- 61: Tragbauteil
- 63: Blechumformteil
- 65: Seitenwand
- 67: Auflagefläche
- 69: Bodenblechteil
- 71: Deckblechteil
- 73: Hutprofil
- 91: Tragbauteil
- 93: Blechumformteil
- 95: Seitenwand
- 97: Versteifungselement
- 99: vorderer Endabschnitt
- 101: trichterförmige Erweiterung
- 102: vorderer Querträger
- 103: hinterer Endabschnitt
- 105: hinterer Querträger

- A: Fahrzeuglängsachse
- Z: Fahrzeughochachse

## Patentansprüche

1. Fahrgestell für Nutzfahrzeuge, insbesondere für Sattelzugfahrzeuge, wobei das Fahrgestell entlang der Fahrzeuglängsachse (A) in zwei oder drei separate Baugruppen (17, 19, 21) unterteilt ist, wobei jede Baugruppe an den beiden Längsseiten des Fahrgestells ein jeweiliges Tragbauteil (31, 61, 91) aufweist, wobei die beiden Tragbauteile einer jeden Baugruppe quer zur Fahrzeuglängsachse voneinander beabstandet und durch Verbindungselemente miteinander verbunden sind,
wobei die Tragbauteile (31, 61, 91) einer jeden Baugruppe ein jeweiliges Blechumformteil (33, 63, 93) aufweisen, das an der jeweiligen Längsseite des Fahrgestells eine Seitenwand (35, 65, 95) des Fahrgestells bildet, wobei das Blechumformteil entlang der Höhe der jeweiligen Seitenwand einstückig ausgebildet ist,
und wobei das Fahrgestell einen Vorderachsbereich (11), einen Hinterachsbereich (15) und einen zwischen dem Vorderachsbereich und dem Hinterachsbereich gelegenen Mittenbereich (13) aufweist, **dadurch gekennzeichnet, dass**
die die Tragbauteile (31,61,91) bildenden Blechumformteile (33, 63, 93) in dem Vorderachsbereich (11) und dem Hinterachsbereich (15) des Fahrgestells C-Profile sind und in dem Mittenbereich (13) des Fahrgestells L-Profile sind.

2. Fahrgestell nach Anspruch 1,
**dadurch gekennzeichnet,**
**dass** die Baugruppen (17, 19, 21) unlösbar miteinander verbunden sind,
wobei die Baugruppen vorzugsweise miteinander verschweißt sind, und/oder wobei die Tragbauteile der verschiedenen Baugruppen vorzugsweise in einem solchen Abschnitt des Fahrgestells miteinander verbunden sind, in dem die Tragbauteile einen im Vergleich zu anderen Abschnitten relativ großen Querschnitt besitzen.

3. Fahrgestell nach Anspruch 1 oder 2,
**dadurch gekennzeichnet,**
**dass** zumindest in einer Baugruppe (19) die Tragbauteile (61) ausschließlich durch das jeweilige Blechumformteil (63) gebildet sind, und/oder
**dass** die Seitenwände (35, 65, 95) einer jeden Baugruppe (17, 19, 21) im Wesentlichen geschlossen sind.

4. Fahrgestell nach einem der vorhergehenden Ansprüche,
**dadurch gekennzeichnet,**
**dass** die Tragbauteile (31, 91) in dem Vorderachsbereich (11) und/oder dem Hinterachsbereich (15) des Fahrgestells als ein jeweiliges geschlossenes Profil ausgebildet sind,
und / oder
**dass** in dem Mittenbereich (13) des Fahrgestells der lange Schenkel des L-Profils die jeweilige Seitenwand (65) bildet und der kurze Schenkel des L-Profils einen Teil der Oberseite des Fahrgestells bildet.

5. Fahrgestell nach einem der vorhergehenden Ansprüche,
**dadurch gekennzeichnet,**
**dass** in dem Mittenbereich (13) des Fahrgestells die Tragbauteile (31, 61, 91) an der Unterseite des Fahrgestells durch ein Bodenblechteil (69) miteinander verbunden sind,
und/oder
**dass** in dem Mittenbereich (13) des Fahrgestells die Tragbauteile (31, 61, 91) an der Oberseite des Fahrgestells durch ein Deckblechteil (71) miteinander verbunden sind,
und/ oder
**dass** in dem Mittenbereich (13) des Fahrgestells die Tragbauteile (31, 61, 91) gemeinsam mit einem Bodenblechteil (69) und einem Deckblechteil (71) ein geschlossenes Profil bilden.

6. Fahrgestell nach einem der vorhergehenden Ansprüche,
**dadurch gekennzeichnet,**
**dass** in dem Mittenbereich (13) des Fahrgestells zwischen den zwei Seitenwänden (65) zumindest zwei Treibstofftanks aufgenommen sind, wobei der eine Tank benachbart zu der einen Seitenwand angeordnet ist und der andere Tank benachbart zu der anderen Seitenwand angeordnet ist, und wobei die beiden Tanks voneinander beabstandet sind.

7. Fahrgestell nach einem der vorhergehenden Ansprüche,
**dadurch gekennzeichnet,**
**dass** das Fahrgestell entlang der Fahrzeuglängsachse (A) in drei Baugruppen (17, 19, 21) unterteilt ist, wobei eine vordere Baugruppe (17) dem Vorderachsbereich (11), eine mittlere Baugruppe (19) dem Mittenbereich (13) und eine hintere Baugruppe (21) dem Hinterachsbereich (15) des Fahrgestells zugeordnet ist.

8. Fahrgestell nach Anspruch 7,
**dadurch gekennzeichnet,**
**dass** die Tragbauteile (61) der mittleren Baugruppe (19) im Wesentlichen einlagig ausgebildet sind,
und/oder
**dass** die Tragbauteile (61) der mittleren Baugruppe (19) baugleich sind.

9. Fahrgestell nach Anspruch 7 oder 8,
**dadurch gekennzeichnet,**
**dass** die Tragbauteile (31) der vorderen Baugruppe (17) und/oder die Tragbauteile (91) der hinteren Baugruppe (21) eine jeweilige trichterförmige Erweiterung (51, 101) umfassen, an der die Tragbauteile mit dem jeweiligen Tragbauteil (61) der mittleren Baugruppe (19) verbunden sind.

10. Fahrgestell nach einem der Ansprüche 1 bis 6,
**dadurch gekennzeichnet,**
**dass** das Fahrgestell entlang der Fahrzeuglängsachse (A) in zwei Baugruppen (17, 21) unterteilt ist, wobei eine vordere Baugruppe (17) dem Vorderachsbereich (11) und einem vorderen Teil des Mittenbereichs (13) des Fahrgestells zugeordnet ist, und wobei eine hintere Baugruppe (21) dem Hinterachsbereich (15) und einem hinteren Teil des Mittenbereichs (13) des Fahrgestells zugeordnet ist.

11. Fahrgestell nach Anspruch 10,
**dadurch gekennzeichnet,**
**dass** die vordere Baugruppe (17) und die hintere Baugruppe (21) in einem Abschnitt des Mittenbereichs (13) des Fahrgestells miteinander verbunden sind, in dem das Fahrgestell seinen größten Querschnitt besitzt.

12. Fahrgestell nach Anspruch 10 oder 11,
**dadurch gekennzeichnet,**
**dass** die Tragbauteile (31) der vorderen Baugruppe (17) in einem Übergangsabschnitt zwischen dem Vorderachsbereich (11) und dem Mittenbereich (13) des Fahrgestells eine jeweilige trichterförmige Erweiterung (51) umfassen,
und/oder
**dass** die Tragbauteile (91) der hinteren Baugruppe (21) in einem Übergangsabschnitt zwischen dem Hinterachsbereich (15) und dem Mittenbereich (13) des Fahrgestells eine jeweilige trichterförmige Erweiterung (101) umfassen.

13. Fahrgestell nach einem der vorhergehenden Ansprüche,
**dadurch gekennzeichnet,**
**dass** am vorderen Ende des Fahrgestells die Tragbauteile (31) mit einem jeweiligen Multifunktionsgussteil (41) verbunden sind, das Aufnahmen für einen vorderen Querträger (43), für eine Vorderachsaufhängung, für einen Unterfahrschutz (45), für eine Lenkungsanordnung, für eine vordere Fahrerhauslagerung und für eine Abschleppöse aufweist, wobei die beiden Multifunktionsgussteile durch den vorderen Querträger miteinander verbunden sind.

## Claims

1. A chassis for commercial vehicles, in particular for articulated vehicles, wherein the chassis is divided into two or three separate sub-assemblies (17, 19, 21) along the longitudinal axis (A) of the vehicle, wherein each sub-assembly has a respective support component (31, 61, 91) at the two longitudinal sides of the chassis, wherein the two support components of each sub-assembly are spaced apart from one another transverse to the longitudinal axis of the vehicle and are connected to one another by connection elements; wherein the support components (31, 61, 91) of each sub-assembly have a respective formed sheet metal part (33, 63, 93) which forms a side wall (35, 65, 95) of the chassis at the respective longitudinal side of the chassis, with the formed sheet metal part being formed as one piece along the height of the respective side wall;
and wherein the chassis has a front axle region (11), a rear axle region (15) and a central region (13) lying between the front axle region and the rear axle region;
**characterized in that**
the formed sheet metal parts (33, 63, 93) forming the support components (31, 61, 91) are C-sections in the front axle region (11) and in the rear axle region (15) of the chassis and are L-sections in the central region (13) of the chassis.

2. A chassis in accordance with claim 1,
**characterized in that**
the sub-assemblies (17, 19, 21) are inseparably connected to one another,
with the sub-assemblies preferably being welded to one another, and/or with the support components of the different sub-assemblies preferably being connected to one another in such a section of the chassis in which the support components have a relatively large cross-section in comparison to other sections.

3. A chassis in accordance with claim 1 or claim 2,
**characterized in that**
the support components (61) in at least one sub-assembly (19) are exclusively formed by the respective formed sheet metal part (63); and/or
**in that** the side walls (35, 65, 95) of each sub-assembly (17, 19, 21) are substantially closed.

4. A chassis in accordance with any one of the preceding claims,
**characterized in that**
the support components (31, 91) are formed as a respective closed section in the front axle region (11) and/or the rear axle region (15) of the chassis;
and/or
**in that** the long limb of the L-section forms the respective side wall (65) in the central region (13) of the chassis and the short limb of the L-section forms a part of the upper side of the chassis.

5. A chassis in accordance with any one of the preceding claims,
**characterized in that**
the support components (31, 61, 91) are connected to one another by a base sheet metal part (69) at the lower side of the chassis in the central region (13) of the chassis;
and/or
**in that** the support components (31, 61, 91) are connected to one another by a cover sheet metal part (71) at the upper side of the chassis in the central region (13) of the chassis;
and/or
**in that** the support components (31, 61, 91) form a closed section together with a base sheet metal part (69) and a cover sheet metal part (71) in the central region (13) of the chassis.

6. A chassis in accordance with any one of the preceding claims,
**characterized in that**
at least two fuel tanks are received between the two side walls (65) in the central region (13) of the chassis, with the one tank being arranged adjacent to the one side wall and the other tank being arranged adjacent to the other side wall, and with both tanks being spaced apart from one another.

7. A chassis in accordance with any one of the preceding claims,
**characterized in that**
the chassis is divided into three sub-assemblies (17, 19, 21) along the longitudinal axis (A) of the vehicle, with a front sub-assembly (17) being associated with the front axle region (11), a central sub-assembly (19) being associated with the central region (13) and a rear sub-assembly (21) being associated with the rear axle region (15).

8. A chassis in accordance with claim 7,
**characterized in that**
the support components (61) of the central sub-assembly (19) are substantially formed in a single layer;
and/or
**in that** the support components (61) of the central sub-assembly (19) are of the same design.

9. A chassis in accordance with claim 7 or claim 8,
**characterized in that**
the support components (31) of the front sub-assembly (17) and/or the support components (91) of the rear sub-assembly (21) comprise a respective funnel shaped extended portion (51, 101) at which the support components are connected to the respective support component (61) of the central sub-assembly (19).

10. A chassis in accordance with any one of the claims 1 to 6,
**characterized in that**
the chassis is divided into two sub-assemblies (17, 21) along the longitudinal axis (A) of the vehicle, with a front sub-assembly (17) being associated with the front axle region (11) and with a front part of the central region (13) of the chassis, and with a rear sub-assembly (21) being associated with the rear axle region (15) and with a rear part of the central region (13) of the chassis.

11. A chassis in accordance with claim 10,
**characterized in that**
the front sub-assembly (17) and the rear sub-assembly (21) are connected to one another in a section of the central region (13) of the chassis in which the chassis has its largest cross-section.

12. A chassis in accordance with claim 10 or claim 11,
**characterized in that**
the support components (31) of the front sub-assembly (17) comprise a respective funnel-shaped extended portion (51) in a transition section between the front axle region (11) and the central region (13) of the chassis,
and/or
**in that** the support components (91) of the rear sub-assembly (21) comprise a respective funnel-shaped extended portion (101) in a transition section between the rear axle region (15) and the central region (13) of the chassis.

13. A chassis in accordance with any one of the preceding claims,
**characterized in that**
the support components (31) are connected to a respective multifunctional cast part (41) at the front end of the chassis, which multifunctional cast part has receptacles for a front crossbar (43), for a front axle suspension, for an underride protection (45), for a steering arrangement, for a forward cab mounting and for a towing eye, with the two multifunctional cast parts being connected to one another by the forward crossbar.

## Revendications

1. Châssis de roulement pour véhicules utilitaires, en particulier pour véhicules semi-remorques, dans lequel le châssis de roulement est subdivisé le long de l'axe longitudinal (A) du véhicule en deux ou trois groupes structurels séparés (17, 19, 21), tels que chaque groupe structurel sur les deux côtés longitudinaux du châssis de roulement comprend un composant porteur respectif (31, 61, 91), et les deux composants porteurs de chaque groupe structurel sont écartés l'un de l'autre transversalement à l'axe longitudinal du véhicule et sont reliés l'un à l'autre par des éléments de liaison,
dans lequel les composants porteurs (31, 61, 91) de chaque groupe structurel comprennent une pièce conformée en tôle respective (33, 63, 93), qui forment au niveau du côté longitudinal respectif du châssis de roulement une paroi latérale (35, 65, 95) du châssis de roulement, et la pièce conformée en tôle est réalisée d'une seule pièce le long de la hauteur de la paroi latérale respective,
et dans lequel le châssis de roulement comprend une zone vers l'essieu avant (11), une zone vers l'essieu arrière (15), et une zone médiane (13) située entre la zone vers l'essieu avant et la zone vers l'essieu arrière,
**caractérisé en ce que**
les pièces conformées en tôle (33, 63, 93) qui forment les composants porteurs (31, 61, 91) dans la zone vers l'essieu avant (11) et dans la zone vers l'essieu arrière (15) du châssis de roulement sont des profilés en C, et dans la zone médiane (13) du châssis de roulement, elles sont des profilés en L.

2. Châssis de roulement selon la revendication 1,
**caractérisé en ce que** les groupes structurels (17, 19, 21) sont reliés les uns aux autres de manière indétachable,
tels que les groupes structurels sont de préférence soudés les uns aux autres,
et/ou tels que les composants porteurs des différents groupes structurels sont reliés les uns aux autres de préférence dans un tronçon du châssis de roulement dans lequel les composants porteurs possèdent une section transversale relativement grande par comparaison à d'autres tronçons.

3. Châssis de roulement selon la revendication 1 ou 2,
**caractérisé en ce que**, au moins dans un groupe structurel (19), les composants porteurs (61) sont formés exclusivement par la pièce conformée en tôle (63) respective,
et/ou
**en ce que** les parois latérales (35, 65, 95) de chaque groupe structurel (17, 19, 21) sont essentiellement fermées.

4. Châssis de roulement selon l'une des revendications précédentes,
**caractérisé en ce que** les composants porteurs (31, 91) dans la zone vers l'essieu avant (11) et/ou dans la zone vers l'essieu arrière (15) du châssis de roulement sont réalisés comme un profil respectif fermé, et/ou **en ce que**, dans la zone médiane (13) du châssis de roulement, la branche longue du profil en L forme la paroi latérale respective (65) et la branche courte du profil en L forme une partie de la face supérieure du châssis de roulement.

5. Châssis de roulement selon l'une des revendications précédentes,
**caractérisé en ce que**, dans la zone médiane (13) du châssis de roulement, les composants porteurs (31, 61, 91) sont reliés les uns aux autres à la face inférieure du châssis de roulement par une pièce en tôle (69) de fond,
et/ou
**en ce que** dans la zone médiane (13) du châssis de roulement les composants porteurs (31, 61, 91) à la face supérieure du châssis de roulement sont reliés les uns aux autres par une pièce en tôle de couverture (71),
et/ou
**en ce que** dans la zone médiane (13) du châssis de roulement les composants porteurs (31, 61, 91) forment, conjointement avec une pièce en tôle de fond (69) et une pièce en tôle de couverture (71), un profil fermé.

6. Châssis de roulement selon l'une des revendications précédentes,
**caractérisé en ce que** dans la zone médiane (13) du châssis de roulement entre les deux parois latérales (65) sont logés au moins deux réservoirs à carburant, tels que l'un des réservoirs est agencé au voisinage d'une paroi latérale et que l'autre réservoir est agencé au voisinage de l'autre paroi latérale, et dans lequel les deux réservoirs sont écartés l'un de l'autre.

7. Châssis de roulement selon l'une des revendications précédentes,
**caractérisé en ce que** le châssis de roulement est subdivisé le long de l'axe longitudinal du véhicule (A) en trois groupes structurels (17, 19, 21), tels qu'un groupe structurel antérieur (17) est associé à la zone vers l'essieu avant (11), un groupe structurel médian (19) est associé à la zone médiane (13), et un groupe structurel postérieur (21) est associé à la zone vers l'essieu arrière (15) du châssis de roulement.

8. Châssis de roulement selon la revendication 7,
**caractérisé en ce que** les composants porteurs (61) du groupe structurel médian (19) sont réalisés sensiblement à une seule couche,
et/ou
**en ce que** les composants porteurs (61) du groupe structurel médian (19) sont de structure identique.

9. Châssis de roulement selon la revendication 7 ou 8,
**caractérisé en ce que**
les composants porteurs (31) du groupe structurel antérieur (17) et/ou les composants porteurs (91) du groupe structurel postérieur (21) comprennent un élargissement respectif en forme d'entonnoir (51, 101) au niveau duquel les composants porteurs sont reliés avec le composant porteur respectif (61) du groupe structurel médian (19).

10. Châssis de roulement selon l'une des revendications 1 à 6,
**caractérisé en ce que** le châssis de roulement est subdivisé le long de l'axe longitudinal du véhicule (A) en deux groupes structurels (17, 21), tels qu'un groupe structurel antérieur (17) est associé à la zone vers l'essieu avant (11) et à une partie antérieure de la zone médiane (13) du châssis de roulement, et dans lequel un groupe structurel postérieur (21) est associé à la zone de l'essieu arrière (15) et à une partie postérieure de la zone médiane (13) du châssis de roulement.

11. Châssis de roulement selon la revendication 10,
**caractérisé en ce que** le groupe structurel antérieur (17) et le groupe structurel postérieur (21) sont reliés l'un à l'autre dans un tronçon de la zone médiane (13) du châssis de roulement, tronçon dans lequel le châssis de roulement possède sa plus forte section transversale.

12. Châssis de roulement selon la revendication 10 ou 11,
**caractérisé en ce que** les composants porteurs (31) du groupe structurel antérieur (17) inclut un élargissement respectif (51) en forme d'entonnoir dans un tronçon de transition entre la zone vers l'essieu avant (11) et la zone médiane (13) du châssis de roulement,
et/ou **en ce que** les composants porteurs (91) du groupe structurel arrière (21) incluent un élargissement respectif en forme d'entonnoir (101) dans un tronçon de transition entre la zone vers l'essieu arrière (15) et la zone médiane (13) du châssis de roulement.

13. Châssis de roulement selon l'une des revendications précédentes,
**caractérisé en ce que**, à l'extrémité antérieure du châssis de roulement, les composants porteurs (31) sont reliés à une pièce de fonderie respective multifonctionnelle (41), qui comporte des logements pour un support transversal antérieur (43), pour une suspension d'essieu avant, pour un protecteur sous le châssis (45), pour un agencement de direction, pour une monture antérieure destinée à la cabine du conducteur, et pour un oeillet de remorquage, tels que les deux pièces de fonderie multifonctionnelle sont reliées l'une à l'autre par le support transversal antérieur.
